# EUROPEAN PATENT SPECIFICATION

(11) **EP 4 240 575 B1**
(45) Date of publication and mention of the grant of the patent: **03.07.2024**
(21) Application number: 20830007.9
(22) Date of filing: 09.11.2020
(51) Int. Cl.: B29C 64/141, B33Y 70/00, B28B 1/00

(54) **METHOD OF ADDITIVE MANUFACTURING OF A 3D OBJECT BY LAYERING BASE BLOCKS**
VERFAHREN ZUR ADDITIVEN FORMUNG EINES 3D-OBJEKTS DURCH SCHICHTUNG BASISCHER BLÖCKE
PROCÉDÉ DE FORMATION ADDITIVE D'UN OBJET 3D PAR STRATIFICATION DE BLOCS DE BASE

(43) Date of publication of application: 13.09.2023
(73) Proprietor: Jancosek, Michal, 900 44 Tomásov (SK)
(72) Inventor: Jancosek, Michal, 900 44 Tomásov (SK)
(74) Representative: Cechvalova, Dagmar
(86) International application number: PCT/SK2020/050019
(87) International publication number: WO 2022/098315

(56) References cited:
- WO-A1-2004/005640
- CN-A- 106 003 365
- US-B1- 10 190 313

## Description

### Field of the invention

The invention relates to a method of additive forming of a 3D object by layering basic blocks. The invention belongs to the field of additive manufacturing of 3D objects.

### Background of the invention

At present, an additive technology for the manufacturing of spatial objects using 3D printers is known, which are based on the same basic principle, i.e. they create an object using digital design data by curing the fusible material gradually in one layer after another. Additive technology for the manufacturing of spatial objects on 3D printers produces objects of various sizes, shapes and structures. There are several methods of 3D printing. Each of the methods differs in price, speed, accuracy and materials used, has its advantages and disadvantages. In melt deposition modeling technology, the plastic fiber is fed to a printer, where it is melted and applied in layers that gradually solidify. A characteristic document describing this technology is WO 2018/223043 A1, where in addition support beams are also used. In selective laser sintering technology, a fine powder (metal or plastic) is applied and a laser moves over it, which selectively bakes it into the bottom layer. This allows a wide variety of materials to be used. A characteristic document describing this technology is also the document JP 2019/147343 A, where, in addition, supporting objects are also used. In stereolithography technology, a photosensitive liquid resin is illuminated by a laser or UV light that will cure it. This process is fast and can create shapes with very high resolution. However, the result are objects with limited material strength.

Methods for additive forming of 3D objects by depositing solid blocks are also known in the prior art, as described in CN 109049687 A, where solid base blocks of various shapes are first formed from thermoplastic resin material reinforced with fibers, and then these blocks are deposited in layers, the surface of the blocks is coated with adhesive. Blocks in the same layer can have different heights. Document EP 3427869 A1 is also known, where a method of manufacturing 3D objects based on joining prefabricated blocks into layers is described. The solid material from which the blocks are prepared is selected from the group of metallic, polymeric, composite material and combinations thereof. US 10190313 B1 discloses a method of additive manufacturing according to the preamble of the appended claim 1.

None of the technologies described above, in particular the technology of laying blocks in layers, contains an additional structure which would guarantee the accuracy of the laying of blocks, the strength of the joined blocks and the possibility of easy creation of various overhangs and openings.

### Summary of the invention

The above-mentioned drawbacks of the prior art are eliminated by the method of additive forming of a 3D object by layering the basic blocks according to the invention. The solution is based on placing blocks of any shape on guiding elements, preferably realized by a rod or a thin cable, while they are preferably placed on top of each other. The guiding elements are preferably embedded or anchored on the base plates parallel to each other, for example in a grid, thus filling the working space. The number and arrangement of the used guiding elements is preferably determined according to the desired characteristics of the object being formed, taking into account the materials used.

The basis of the method of additive forming of a 3D object by layering solid base blocks lies in the following steps. At first is formed an arrangement of at least one guiding element oriented in the direction of forming of the 3D object. This is followed by depositing a first layer comprising at least one solid base block in the horizon of the first layer and depositing at least one further layer comprising at least one solid base block in a horizon spatially distant from the horizon of the first layer in the direction of forming of a 3D object. For the purposes of the present invention, the term "horizon" is intended to mean an imaginary two-dimensional geometric shape in space passing through the geometric center of each base block of a given layer.

In this case, the at least one base block of the at least one layer is arranged in the region of the at least one guiding element and is arranged with at least one cooperating means, cooperating with the said at least one guiding element. Preferably, at least one such base block is arranged in each layer, in which case the overall strength as well as the dimensional accuracy of the finally formed object is increased. Advantageously, it is possible to use, for example, holes in the volume of the base block or mechanical means known to those skilled in the art as cooperating means. It is also possible for at least one solid base block of each layer to be arranged in the region of at least two guiding elements and to be arranged with at least two cooperating means, each of which cooperates with at least one of these guiding elements. It is also possible for at least one solid base block of each layer to be arranged in the region of the at least two guiding elements and to be arranged with at least one cooperating means which cooperates with these at least two guiding elements.

At least two different base blocks can advantageously be used in the method according to the invention. In this case, the final object may advantageously be composed of different materials. Thanks to this, it is possible to create pre-designed objects with different qualitative and aesthetic properties of their individual parts.

It follows from the method that the first layer is preferably arranged on at least one base plate and the horizon of the at least one further layer is preferably parallel to the horizon of the first layer. If the horizon of at least one and preferably all subsequent layers is parallel to the horizon of the first layer, the whole forming method is considerably simplified and accelerated, independently of the possible use of the base plates. It is characteristic of this method that the at least one guiding element is oriented in a direction perpendicular to the horizon of the first layer or that it is also possible for the at least one guiding element has been oriented in a direction other than perpendicular to the horizon of the first layer, e.g. parallel or slantigly. By using guiding elements oriented perpendicular to the horizon of the first layer, the forming process is greatly simplified and accelerated. By the perpendicular direction of the orientation of the guiding element we mean that the angle between the longitudinal axis of the guiding element and the horizon of a given layer at their intersection is perpendicular. Other angles given in connection with the arrangement of the guiding elements in relation to the horizon of a given layer must be understood analogously. According to the invention the at least one base block will be arranged with the fastening means or that all solid base blocks will be arranged with the fastening means. Preferably, the fastening means is an adhesive or other suitable fastening material. It is also possible to use mechanical fastening means, such as screws and nuts. It is possible for the fastening means to be a contact surface from thermoplastic material from which the base block is made or with which the base block is at least partially coated. Strengthening occurs after the thermal process. For some uses of a 3D object it is advantageous that after step c), the base plate, if used, will be removed. According to the invention at least one guiding element is removed. In order to strengthen the 3D object the 3D object is preferably reinforced by a thermal process. In this case, it is advantageous if at least one base block is made of a thermoplastic material.

The advantages of the method of additive forming of a 3D object by layering basic blocks are in that the proposed solution can advantageously store zigzag blocks, for example if at least one base block is arranged in the area of at least two guiding elements and is arranged with at least one alignment means cooperating with at least two guiding elements, preferably without the need for the use of a fastening means. The guiding means also enable a more precise placement of the individual basic blocks and thus a greater shape accuracy of the formed 3D object.

The base blocks arranged with the fastening means are pressed together at different levels by means of guiding elements preferably for a longer period of time in order to achieve a good connection. In this case, it is advantageous if at least one base plate is used. The guiding elements and the base plate serve primarily as a structure guaranteeing the accuracy of the production and also serve as a support structure for creating pressure for the use of the fastening means. Upon completion of the iterative process of depositing and hardening the blocks, at least one guiding element and preferably at least one base plate are removed and the resulting object will be solid and can have any spatial shape.

By a suitable combination of the use of fastening means, guiding means and preferably also of the base plate or plates, it is possible to create self-supporting structures of objects in a very flexible way without other supporting structures.

Another significant advantage of the solution is the creation of various overhangs and openings so that the stored support blocks will not be e.g. arranged without a fastening means and after completion of the additive forming of the 3D object by layering, they are removed and optionally can be recycled during further forming of the 3D object. When forming higher 3D objects, overhangs and sloping surfaces on the built higher layers can be made using guiding elements oriented in a direction other than perpendicular to the horizon of the first layer, thus saving a number of basic blocks, which would serve only as supporting elements during construction and at the end will be removed. This method of additive forming of a 3D object by layering allows the use of blocks of different materials, e.g. thermoplastic materials, colors and dimensions, thus having a wide application. Also, the size of blocks and grids allows to produce devices for additive forming of 3D objects of various sizes, whether for the manufacturing of small 3D objects such as vases, cups, flower pots, etc., or medium-sized objects such as cabinets, chairs and furniture in general. It is also possible to manufacture human and animal figures in real size. Finally, it is possible to manufacture whole houses.

### Overview of drawings

The method of additive forming of a 3D object by layering the basic blocks according to the invention is illustrated in the accompanying drawings, in which:
Figure 1 shows the types of elements of the layered 3D object itself, also with the guiding element and the base plate of the device, which are necessary for carrying out the additive forming method and also with the alignment means of the device.
Figure 2 shows the placement of the blocks of the first layer of the 3D object on the base plate also with the embedded guiding elements.
Figure 3 shows the application of pressure to the first layer of stored blocks of a 3D object in order to achieve the accuracy of the arrangement.
Figure 4 shows the application of pressure for a sufficient time to the last layer of the stored blocks of the 3D object in order to achieve the accuracy of the arrangement and at the same time in order to thoroughly apply the fastening means and fasten the blocks.
Figure 5 shows the removal of some loose blocks and the guiding structure.
Figure 6 shows the final formed 3D object after removing the base plates, guiding elements and remaining unattached blocks.
Figure 7 shows the final terrace 3D object with the arranged guiding elements and base plates after the removal of the alignment means and some unattached blocks.
Figure 8 shows the final terrace 3D object created after removal of the alignment means, guiding elements and base plates and all unattached blocks.
Figure 9 shows the placement of a block of the last layer of a 3D object on an embedded guiding element.
Figure 10 shows the placement of blocks of a 3D object with a horizontally oriented niche.
Figure 11 shows the placement of blocks of a 3D object with a sloping roof.
Figures 12, 13 and 14 show the arrangement of a 3D object in the shape of an expanding trihedron in bottom, side and top views.

All figures show preferred embodiments with fastening means used on the base blocks, shown by a double contour line.

### Examples of embodiments of the invention

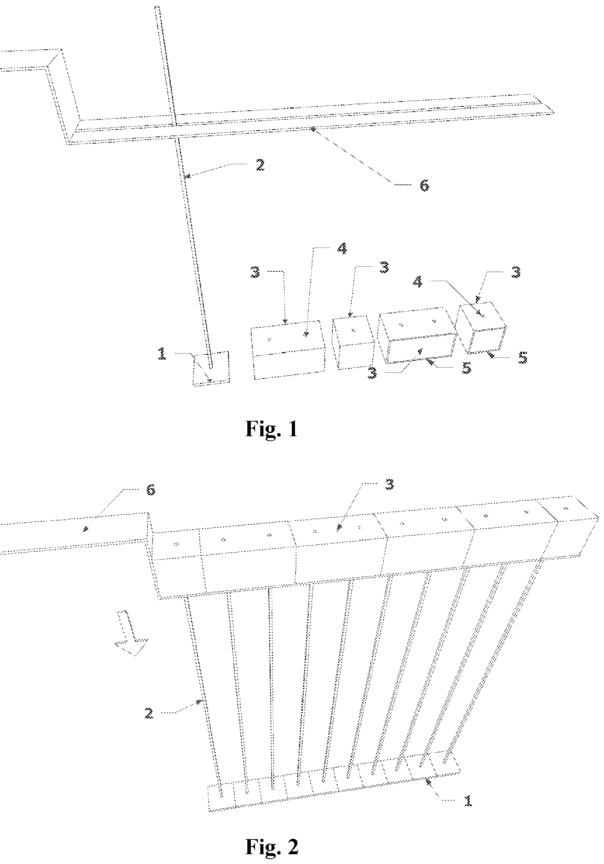

Fig. 1 shows a range of elements that are necessary for the additive forming of a 3D object by layering base blocks. The range of elements thus consists of base plates 1, of guiding elements 2, which are rods, sticks or cables, wires, various rod profiles and the like. Furthermore, they are the basic blocks 3 in the shape of a block and a cube with one cooperating means 4 - a hole, an opening for the guiding elements 2. They are also the basic blocks 3 in the shape of a block and a cube with two cooperating means 4 - holes, openings for guiding elements 2. They are also the base blocks 3 themselves with the fastening means 5 applied - e.g. glue with one cooperating means 4 - hole, opening for guiding elements 2. They are also the base blocks 3 themselves with the fastening means 5 applied - e.g. glue with two cooperating means 4 - holes, openings for guiding elements 2. The basic blocks can generally be blocks of any shape and material. The device that will perform the additive forming of a 3D object by layering the basic blocks is not subject to protection, nor is it shown in any image. The reference is to only one member of this device, namely the alignment means 6, cooperating with one auxiliary element of the technology, which is the guiding element 2. The alignment means 6 is e.g. robotic arm or sliding cat, or special bar.

### Example 1

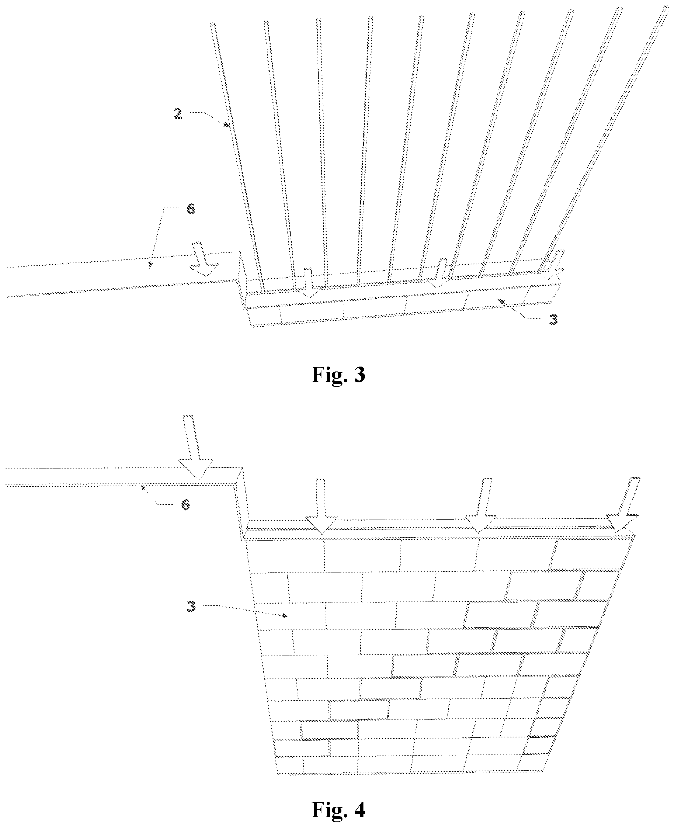

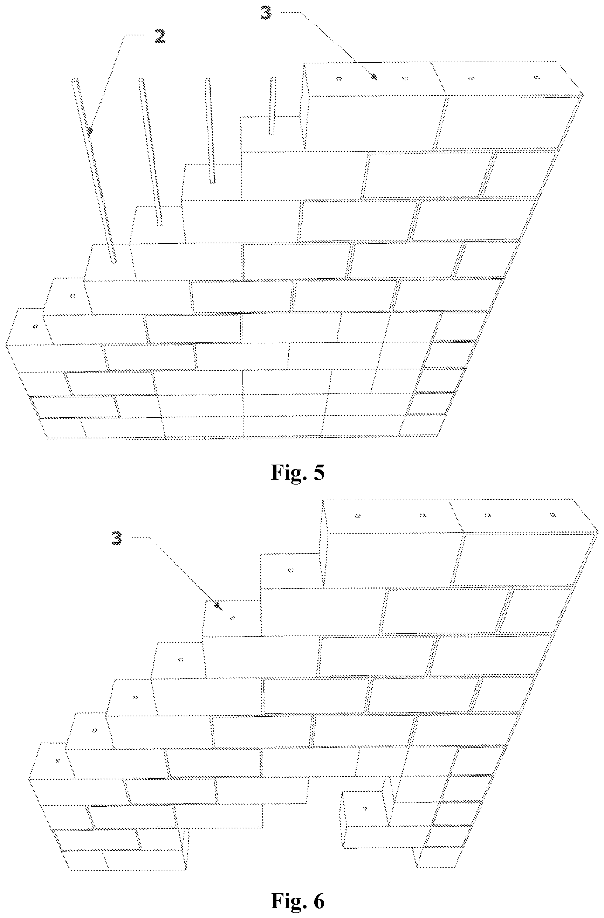

In this example of a specific embodiment an implementation of the method of additive forming of a 3D object by layering base blocks according to the invention is described, which is illustrated on created a 3D object - stairs with an opening in the base and central part shown in Fig. 1 to 6. The method of additive forming of a 3D object by layering solid base blocks 3 consists of the following steps: Initially, the required number of guiding elements 2 is prepared and distributed. The number of guiding elements is determined according to the required characteristics of the object being formed, taking into account the materials used. This creates a linear working grid with parallel guiding elements 2 axially oriented in a direction perpendicular to the horizon of the first layer, the guiding elements being oriented in the direction of forming the 3D object. This operation is preferably preceded by an auxiliary operation taking place outside the space of additive forming of the 3D object, which is the deposition of the first layer of base blocks 3 on the alignment means 6. Preferably, an auxiliary operation follows, which is the movement of the base blocks 3 of the first layer on the alignment means 6 exactly above the guiding elements 2 arranged in one line in the horizon of the first layer, while the cooperating means 4 on the base blocks 3 being above the guiding elements 2. The next step is to deposit the first layer of solid base blocks 3 in the horizon of the first layer by means of cooperating means 4, through which they are threaded on the guiding elements 2 by means of the alignment means 6 of the processing device. Alternatively, two or more non-illustrated alignment means 6 may be used. The horizons of all subsequent layers are parallel to the horizon of the first layer. The placement of the base blocks 3 of the first layer on the guiding elements 2 takes place by a vertical displacement of the base blocks 3 of the first layer placed on the alignment means 6, what is shown in Fig. 2. Another advantageous auxiliary action is to extend the alignment means 6 from below the first layer out of the additive forming space of the 3D object and to slide it over the already stored first layer of base blocks 3, the alignment means 6 exerting pressure on the first layer of base blocks 3 to achieve arrangement accuracy, what is shown in Fig. 3. The horizon of the next layer is spatially distant from the horizon of the previous layer in the direction of forming the 3D object by the height of the solid base blocks 3. This is followed by the step of depositing the second layer of base blocks 3 at a horizon spatially spaced from the horizon of the first layer in the direction of forming the 3D object, this layer and subsequent layers already containing respective base blocks 3 provided preferably with fastening means 5 - e.g. glue. This is done until the last layer of the base blocks 3 is deposited and pressure is applied for a sufficient time in order to achieve the accuracy of the arrangement and at the same time in order to solidify the adhesive and stick the base blocks 3, as shown in Fig. 4. In the next step, the removal of all the guiding elements 2 and some of the non-glued base blocks 3 takes place, as shown in Fig. 5.

In a preferred alternative, the preparation and layout of the base plates 1 are initially arranged and arranged in such a way that an imaginary two-dimensional geometric shape in space passing through the geometric center of each base layer is in principle parallel to the horizon of the first layer, while in the centre of each base plate 1 one guiding element 2 is arranged as shown in Fig. 1. The number of base plates 1 is determined according to the required characteristics of the formed object, taking into account the materials used. Then, the first layer of base blocks is deposited as described above.

Finally, the remaining unreinforced, non-glued base blocks 3 and all the base plates 1 are removed, thus creating an opening in the base and central part of the 3D object as shown in Fig. 6.

This method of additive forming of a 3D object by layering the basic blocks according to the invention is optionally supplemented by a strengthening thermal process for strengthening the formed 3D object. In such a case, it is preferable that at least a part of the used base blocks comprise the thermoplastic material.

### Example 2

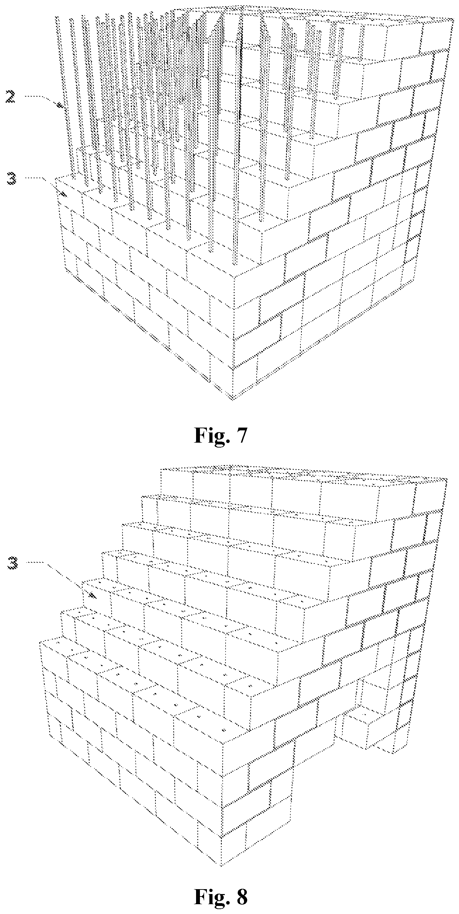

In this example of a specific embodiment an implementation of the method of additive forming of a 3D object by layering base blocks according to the invention is described, which is illustrated on a 3D object - terrace structure with an opening in the base and central part shown in Fig. 7 and 8. The method of additive forming of a 3D object by layering solid base blocks 3 consists of the following steps: Initially, the preparation and layout of the base plates 1 in this case preferably takes place arranged in such a way that an imaginary two-dimensional geometric shape in space passing through the geometric center of each base layer is in principle parallel to the horizon of the first layer. A planar working grid is formed when one guiding element 2 is arranged in the center of each grid - the base plate 1, oriented in a direction perpendicular to the horizon of the first layer, thus being oriented in the direction of forming a 3D object. Analogously, it is possible to create this planar working grid without disassembling the base plates 1, for example as described in Example 1. The next step is to deposit the first layer of solid base blocks 3 on base plates 1 by means of cooperating means 4, through which they are threaded on the guiding elements 2 by means of the alignment means 6 of the production device. Then it follows with the further steps already described in Example 1.

### Example 3

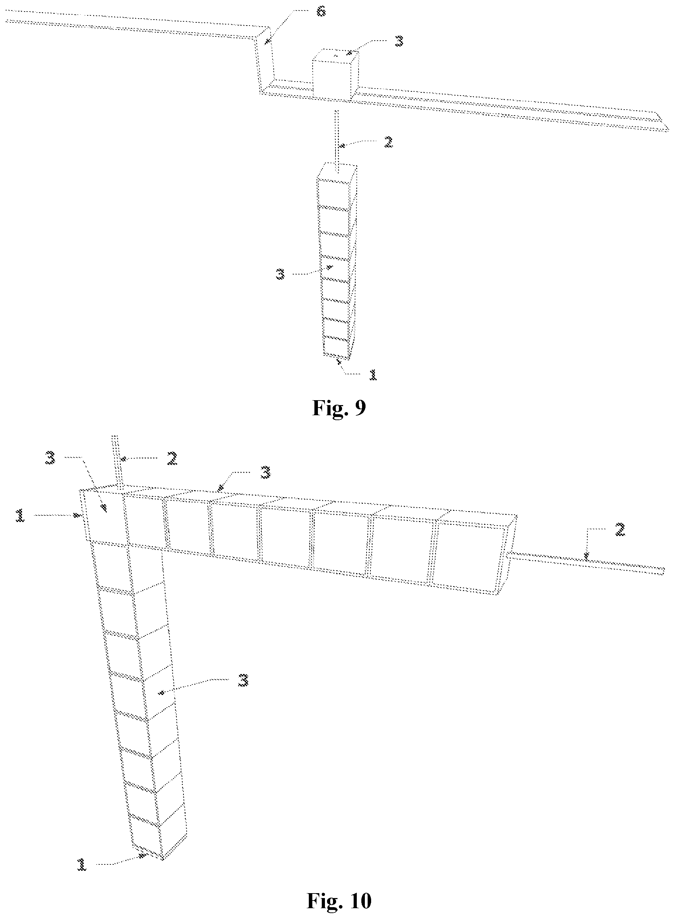

In this example of a specific embodiment an implementation of the method of additive forming of a 3D object by layering base blocks according to the invention is described, which is illustrated on created a 3D object - column and shown in Fig. 9. The method of additive forming of a 3D object by layering solid base blocks 3 consists of the following steps: At the beginning, the preparation and disassembly of one base plate 1 preferably takes place, where one guiding element 2 oriented in the direction of forming a 3D object is arranged in its center. Alternatively, it is possible to proceed without disassembling the base plate 1, analogously to the one described in Example 1. The next step consists in depositing the first layer of one solid base block 3 on the base plate 1 by means of a cooperating means 4, through which it is threaded on the guiding element 2 by means of the alignment means 6 of the production device. Then it follows with the further steps already described in Example 1.

### Example 4

In this example of a specific embodiment an implementation of the method of additive forming of a 3D object by layering base blocks according to the invention is described, which is illustrated on created 3D object - high wall with a niche shown in fig. 10 and which is basically described in Example 1. In addition, a horizontal niche is formed so that on the last layer of the wall, the guiding elements 2 for building the niche are oriented in a direction other than perpendicular to the horizon of the first layer of the built wall.

### Example 5

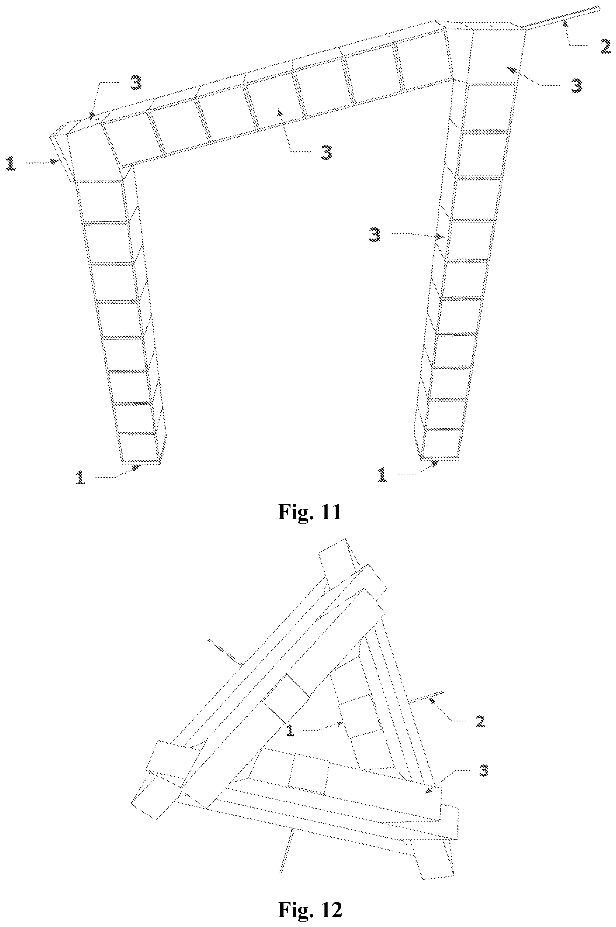

In this example of a specific embodiment an implementation of the method of additive forming of a 3D object by layering base blocks according to the invention is described, which is illustrated on created 3D object - farm building with a sloping roof shown in Fig. 11 and which is basically described in Example 1. In addition, a sloping roof is formed in such a way that on the last layer of walls the guiding elements 2 for building the roof are oriented in a direction other than perpendicular to the horizon of the first layer of built walls.

### Example 6

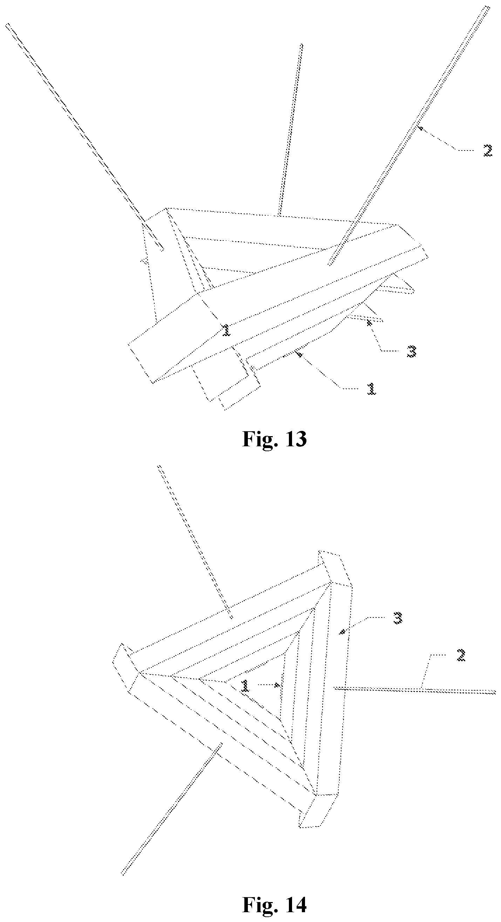

In this example of a specific embodiment, an embodiment of the method of additive forming of a 3D object by layering base blocks according to the invention is described, what is illustrated on created the 3D object - the shape of a diverging trihedron in the bottom, side and top views shown in Fig. 12, 13 and 14. Initially, the three base plates 1 are prepared and distributed into a triangle configuration as shown in Fig. 12. The guiding element 2 is adapted to each base plate in such a way that they are not arranged in parallel but their vertices run outwards from the object as shown in Fig. 13. In FIG. 14 is shown a constructed 3D object from monolithic base blocks 3.

### Industrial usability

The method of additive forming of a 3D object by layering solid base blocks according to the invention is usable in the construction industry, the furniture industry, in the production of toys and small utility objects.

## Claims

1. A method of additive forming of a 3D object by layering solid base blocks (3) comprising the following steps:
a. arranging at least one guiding element (2) oriented in a direction of forming of the 3D object;
b. depositing a first layer comprising at least one solid base block (3) in a horizon of the first layer;
c. depositing at least one further layer comprising at least one solid base block (3) at a horizon spatially spaced from the horizon of the first layer in the direction of forming the 3D object; while at least one base block (3) of the at least one layer is arranged in the region of the at least one guiding element (2) and is arranged with at least one cooperating means (4), cooperating with the said at least one guiding element (2) and the at least one base block (3) is arranged with a fastening means (5); **characterized in that** the method comprises the following step:
d. after step c. removing the at least one guiding element (2).

2. Method according to claim 1, **characterized in that** at least one base block (3) of each layer is arranged in the region of the at least one guiding element (2) and is arranged with at least one cooperating means (4), cooperating with the said at least one guiding element (2).

3. Method according to any one of claims 1 or 2, **characterized in that** the at least one solid base block (3) of the at least one layer is arranged in the region of the at least two guiding elements (2) and is arranged with at least two cooperating means (4), of which each cooperates with at least one of these guiding elements (2).

4. Method according to any one of claims 1 or 2, **characterized in that** the at least one solid base block (3) of the at least one layer is arranged in the region of the at least two guiding elements (2) and is arranged with at least one cooperating means (4) cooperating with these at least two guiding elements (2).

5. Method according to any one of the preceding claims, **characterized in that** the at least two solid base blocks (3) are different.

6. Method according to any one of the preceding claims, **characterized in that** the first layer is arranged on at least one base plate (1).

7. Method according to any one of the preceding claims, **characterized in that** the horizon of the at least one further layer is parallel to the horizon of the first layer.

8. Method according to any one of the preceding claims, **characterized in that** the at least one guiding element (2) is oriented in a direction perpendicular to the horizon of the first layer.

9. Method according to any one of the preceding claims, **characterized in that** the at least one guiding element (2) is oriented in a direction other than perpendicular to the horizon of the first layer.

10. Method according to claim 1, **characterized in that** all solid base blocks (3) are arranged with fastening means (5).

11. Method according to claim 1 or 10, **characterized in that** the fastening means (5) is an adhesive.

12. Method according to any one of the preceding claims, **characterized in that** after step c) the base plate (1) is removed.

13. Method according to any one of the preceding claims, **characterized in that** the 3D object is reinforced by a thermal process.

14. Method according to any one of the preceding claims, **characterized in that** the base blocks (3) with the at least one cooperating means (4) are arranged in the region of the at least one guiding element (2) by means of the at least one alignment means (6).

15. Method according to any one of the preceding claims, **characterized in that** after step (c) but before step (d) the at least one base block (3), arranged with a fastening means (5), is pressed together at different levels with at least one other base block (3) by means of at least one guiding element (2).

16. Method according to any one of the preceding claims, **characterized in that** after completion of the additive forming of the 3D object, at least one base block is removed.

## Patentansprüche

1. Das Verfahren der additiven Formgebung eines 3D-Objekts durch Schichtung von festen Grundblöcken (3) umfasst folgende Schritte:
a. Anordnung von mindestens einem Führungselement (2), das in Richtung der Formgebung des 3D-Objekts ausgerichtet ist,
b. Lagerung der ersten Schicht, die mindestens einen festen Grundblock (3) im Horizont der ersten Schicht enthält,
c. Lagerung von mindestens einer weiteren Schicht, die mindestens einen festen Grundblock (3) enthält, im Horizont, der vom Horizont der ersten Schicht in Richtung der Formgebung des 3D-Objekts räumlich entfernt ist,
wobei mindestens ein Grundblock (3) mindestens einer Schicht im Bereich von mindestens einem Führungselement (2) angeordnet ist und mit mindestens einem kooperierenden Mittel (4) angeordnet ist, das mit mindestens einem angeführten Führungselement (2) kooperiert, und mindestens ein Grundblock (3) mit den Befestigungselementen (5) angeordnet ist, **dadurch gekennzeichnet, dass** das Verfahren den folgenden Schritt umfasst:
d. nach dem Schritt c, Beseitigung mindestens eines Führungselements (2).

2. Verfahren nach Anspruch 1, **dadurch gekennzeichnet, dass** mindestens ein Grundblock (3) jeder Schicht im Bereich von mindestens einem Führungselement (2) angeordnet ist und mit mindestens einem kooperierenden Mittel (4) angeordnet ist, das mit mindestens einem angeführten Führungselement (2) kooperiert.

3. Verfahren nach einem der Ansprüche 1 oder 2, **dadurch gekennzeichnet, dass** mindestens ein fester Grundblock (3) mindestens einer Schicht im Bereich von mindestens zwei Führungselementen (2) angeordnet ist und mit mindestens zwei kooperierenden Mitteln (4) angeordnet ist, von denen jedes mit mindestens einem dieser Führungselemente (2) kooperiert.

4. Verfahren nach einem der Ansprüche 1 oder 2, **dadurch gekennzeichnet, dass** mindestens ein fester Grundblock (3) mindestens einer Schicht im Bereich von mindestens zwei Führungselementen (2) angeordnet ist und mit mindestens einem kooperierenden Mittel (4) angeordnet ist, das mit mindestens diesen beiden Führungselementen (2) kooperiert.

5. Verfahren nach einem der vorangehenden Ansprüche, **dadurch gekennzeichnet, dass** mindestens zwei feste Grundblöcke (3) unterschiedlich sind.

6. Verfahren nach einem der vorangehenden Ansprüche, **dadurch gekennzeichnet, dass** die erste Schicht auf mindestens einer Grundplatte (1) angeordnet ist.

7. Verfahren nach einem der vorangehenden Ansprüche, **dadurch gekennzeichnet, dass** der Horizont mindestens einer weiteren Schicht mit dem Horizont der ersten Schicht parallel ist.

8. Verfahren nach einem der vorhergehenden Ansprüche, **dadurch gekennzeichnet, dass** mindestens ein Führungselement (2) in senkrechter Richtung zum Horizont der ersten Schicht ausgerichtet ist.

9. Verfahren nach einem der vorhergehenden Ansprüche, **dadurch gekennzeichnet, dass** mindestens ein Führungselement (2) in einer anderen als senkrechten Richtung zum Horizont der ersten Schicht ausgerichtet ist.

10. Verfahren nach Anspruch 1, **dadurch gekennzeichnet, dass** alle festen Grundblöcke (3) mit einem Befestigungselement (5) angeordnet sind.

11. Verfahren gemäß Anspruch 1 oder 10, **dadurch gekennzeichnet, dass** das Befestigungsmittel (5) Klebstoff ist.

12. Verfahren nach einem der vorangehenden Ansprüche, **dadurch gekennzeichnet, dass** nach dem Schritt c) die Grundplatte (1) beseitigt wird.

13. Verfahren nach einem der vorangehenden Ansprüche, **dadurch gekennzeichnet, dass** das 3D-Objekt durch einen thermischen Prozess gefestigt wird.

14. Verfahren nach einem der vorangehenden Ansprüche, **dadurch gekennzeichnet, dass** die Grundblöcke (3) mit mindestens einem kooperierenden Mittel (4) im Bereich von mindestens einem Führungselement (2) mithilfe von mindestens einem Leitungsmittel (6) angeordnet sind.

15. Verfahren nach einem der vorangehenden Ansprüche, **dadurch gekennzeichnet, dass** nach dem Schritt (c), jedoch vor dem Schritt (d) mindestens ein Grundblock (3), mit den Befestigungselementen (5) angeordnet, in verschiedenen Ebenen mit mindestens einem weiteren Grundblock (3) mittels von mindestens einem Führungselement (2) gegenseitig zusammengedrückt ist.

16. Verfahren nach einem der vorangehenden Ansprüche, **dadurch gekennzeichnet, dass** nach Beendigung der additiven Formgebung des 3D-Objekts mindestens ein Grundblock beseitigt wird.

## Revendications

1. Le procédé du moulage additif d'un objet 3D par superposition de blocs de base solides (3) comprend les étapes suivantes :
a. Installation d'au moins un élément de guidage (2) orienté dans le sens du moulage de l'objet 3D ;
b. Mise en place de la première couche contenant au moins un bloc de base solide (3) à l'horizon de la première couche ;
c. Mise en place d'une autre couche supplémentaire au moins contenant au moins un bloc de base solide (3), dans un horizon spatialement éloigné de l'horizon de la première couche dans le sens du moulage de l'objet 3D ;
Dans lequel au moins un bloc de base (3) d'au moins une couche, est installé dans la zone d'un élément de guidage (2) au moins et est installé avec au moins un moyen de coopération (4) coopérant avec ledit au moins un guide l'élément (2) et au moins un bloc de base (3) est doté des moyens de fixation (5) ; **caractérisé en ce que** le procédé comprend l'étape suivante : d. après l'étape c, élimination d'au moins un élément de guidage (2).

2. Le procédé selon la revendication 1 **caractérisé en ce qu'** au moins un bloc de base (3) de chaque couche est mis dans la zone d'au moins un élément de guidage (2) et est installé avec au moins un moyen de coopération (4) coopérant avec ledit élément de guidage (2) au moins un.

3. Le procédé selon quelconque des revendications 1 ou 2, **caractérisé en ce qu'** au moins un bloc de base solide (3) d'au moins une couche, est installé dans la zone d'au moins deux éléments de guidage (2) et est installé avec au moins deux moyens de coopération (4) dont chacun coopère avec au moins l'un de ces éléments de guidage (2).

4. Le procédé selon quelconque des revendications 1 ou 2 **caractérisé en ce qu'** au moins un bloc de base solide (3) d'au moins une couche, est disposé dans la zone d'au moins deux éléments de guidage (2) et est installé avec au moins un moyen de coopération (4) qui coopère avec au moins ces deux éléments de guidage (2).

5. Le procédé selon quelconque des revendications précédentes **caractérisé en ce qu'** au moins deux blocs de base solides (3) sont différents.

6. Le procédé selon quelconque des revendications précédentes **caractérisé en ce que** la première couche est disposée sur au moins une plaque de base (1).

7. Le procédé selon quelconque des revendications précédentes **caractérisé en ce que** l'horizon d'au moins une couche supplémentaire est parallèle à l'horizon de la première couche.

8. Le procédé selon quelconque des revendications précédentes **caractérisé en ce qu'** au moins un élément de guidage (2) est orienté dans le sens perpendiculaire à l'horizon de la première couche.

9. Le procédé selon quelconque des revendications précédentes **caractérisé en ce qu'** au moins un élément de guidage (2) est orienté l'autre sens que dans le sens perpendiculaire à l'horizon de la première couche.

10. Le procédé selon la revendication 1 **caractérisé en ce que** tous les blocs de base solides (3) sont installés par moyen de fixation (5).

11. Le procédé selon la revendication 1 ou 10 **caractérisé en ce que** le moyen de fixation (5) est colle.

12. Le procédé selon quelconque des revendications précédentes **caractérisé en ce qu'après** l'étape c) la plaque de base est retirée (1).

13. Le procédé selon quelconque des revendications précédentes **caractérisé en ce que** l'objet 3D est renforcé par un procédé thermique.

14. Le procédé selon quelconque des revendications précédentes **caractérisé en ce que** les blocs de base (3) avec au moins un moyen de coopération (4) sont installés dans la zone d'au moins un élément de guidage (2) par au moins un moyen d'orientation (6).

15. Le procédé selon quelconque des revendications précédentes **caractérisé en ce qu'après** l'étape (c) mais avant l'étape (d), au moins un bloc de base (3) installé avec des moyens de fixation (5) est comprimé à différents niveaux ensemble avec au moins un autre bloc de base (3) par au moins un élément de guidage (2).

16. Le procédé selon quelconque des revendications précédentes **caractérisé en ce que** lorsque le moulage additif de l'objet 3D est terminé, au moins un bloc de base est retiré.
